(19) **Europäisches Patentamt**

**European Patent Office**

**Office européen des brevets**

(11) **EP 0 560 190 B1**

(12) **EUROPÄISCHE PATENTSCHRIFT**

(45) Veröffentlichungstag und Bekanntmachung des Hinweises auf die Patenterteilung:
**16.08.2000 Patentblatt 2000/33**

(51) Int. Cl.[7]: **C08G 18/80**, C08G 18/22, C08G 18/58, C09D 5/44, C08G 18/10

(21) Anmeldenummer: **93103367.4**

(22) Anmeldetag: **03.03.1993**

(54) **Bindemittel für die Elektrotauchlackierung**

Binders for electrodeposition

Liants pour l'électrodéposition

(84) Benannte Vertragsstaaten:
**AT BE CH DE DK ES FR GB IT LI NL PT SE**

(30) Priorität: **13.03.1992 DE 4208056**

(43) Veröffentlichungstag der Anmeldung:
**15.09.1993 Patentblatt 1993/37**

(73) Patentinhaber:
**BASF Coatings Aktiengesellschaft
48165 Münster (DE)**

(72) Erfinder:
• **Huemke, Klaus, Dr.
W-6701 Friedelsheim (DE)**
• **Hoffmann, Gerhard, Dr.
W-6701 Otterstadt (DE)**

• **Faul, Dieter, Dr.
W-6702 Bad Duerkheim (DE)**
• **Blum, Rainer
W-6700 Ludwigshafen (DE)**

(74) Vertreter:
**Münch, Volker, Dr. et al
Dres. Fitzner & Münch
Rechts- und Patentanwälte
Lintorfer Strasse 10
40878 Ratingen (DE)**

(56) Entgegenhaltungen:
**EP-A- 0 102 566      EP-A- 0 456 270
EP-A- 0 462 496      DE-A- 3 938 203**

**Beschreibung**

Die vorliegende Erfindung betrifft neue, für die Elektrotauchlackierung geeignete Bindemittelsysteme aus

- einem Grundharz A, welches primäre und/oder sekundäre Aminogruppen oder kationische quartäre Gruppen sowie gewünschtenfalls Hydroxyl- oder Thiolgruppen trägt,
- einer Vernetzungskomponente B, die pro Molekül mindestens zwei verkappte Isocyanatgruppen trägt, und
- einem in Wasser mindestens teilweise löslichen Komplex des Eisens mit aromatischen carbonyl- oder Hydroxylverbindungen C als Katalysator für die thermische Vernetzung der Komponenten A und B sowie
- gewünschtenfalls einem die katalytische Aktivität von C erhöhenden Zusatz D.

Ferner betrifft die Erfindung wäßrige Dispersionen, die solche Bindemittelsysteme enthalten, sowie die Verwendung der Dispersionen für die Elektrotauchlackierung.

Wie allgemein bekannt ist, hat sich besonders in der Automobilindustrie die kathodische Elektrotauchlackierung zur Beschichtung von Metallteilen durchgesetzt. Guter Korrosionsschutz kann bisher vor allem dann erzielt werden, wenn bleihaltige Elektrotauchbäder verwendet werden. In dem Bestreben, das Blei durch andere Stoffe zu ersetzen, wurde bereits Aluminiumphosphat in Kombination mit einer Zinkverbindung oder Borsäure vorgeschlagen (EP-A 0 318 963), jedoch ist die Härtungsgeschwindigkeit unbefriedigend.

Aus der EP-A-0 462 496 sind bleifreie Elektrotauchlacke bekannt, die Harze enthalten, welche kationische Gruppen sowie blockierte Isocyanatgruppen aufweisen. Die blockierten Isocyanatgruppen werden durch die Umsetzung von Epoxidharzen mit blockierten Polyisocyanaten, die Mercapto- oder Carboxylgruppen enthalten, in die Harze eingeführt. Es handelt sich somit um selbstvernetzende Systeme. Nur durch diese Maßnahme ist es nach EP-A-0 462 496 möglich, den durch das Weglassen von Blei eintretenden Verlust an Korrosionsschutz auszugleichen. Dabei kommt es ursächlich auf die Art- und Weise an, wie die blockierten Isocyanatgruppen in die Harze eingeführt werden: Werden anstelle der Mercapto- oder Carboxylgruppen-haltigen blockierten Polyisocyanate teilblockierte verwendet, ist der Korrosionsschutz deutlich schlechter. Aus der EP-A-0 462 496 geht außerdem als Vergleich ein Elektrotauchlack hervor, der fremdvernetzend ist, d.h., er enthält die Vernetzerkomponente als separate Verbindung, wobei blockierte Polyisocyanate verwendet werden. Die Korrosionsschutz wirkung auf unbehandeltem Stahlblech ist aber schlecht, was untermauert, daß nur die selbtvernetzenden Systeme einen Korrosionsschutz auf allen üblichen Substraten gewähren. Die Vernetzungsreaktionen der Elektrotauchlacke der EP-A-0 462 496 werden durch Zinnverbindungen katalysiert.

Aus der EP-A-0 102 566 sind fremdvernetzende Elektrotauchlacke bekannt, die den jenigen des Vergleichs der EP-A-0 462 496 entsprechen. Sie liefern Beschichtungen, die hinsichtlich ihrer Stabilität gegenüber Aceton völlig umbefriedigend sind. In der EP-A-0 102 566 wird außerdem vorgeschlagen, Salze oder Komplexe des Eisens, des Bleis, Zinks, Zinns oder Mangans zu verwenden, wobei in dem Beispielen nur Zinn zum Einsatz kommt.

Welche Maßnahmen angriffen werden müssen, um eine zügige Härtung der Elektrotauchlackschichten, z.B. erkennbar an einer hohen Stabilität gegenüber Aceton im Acetontest nach Vergleichsweise kurzer Härtungszeit, bei gleichzeitig guter Korrosionsshutzwirkung und guter Elastizität der resultierenden Schichten ohne Verwendung von Blei oder Zinn zu gewährleisten, läßt sich weder der EP-A-0 462 496 noch der EP-A-0 102 566 entnehmen.

Katalysatorlösungen für die Polyurethanbildung, die eine Eisen(III)-Verbindung, eine aromatische Carbonyl- oder Hydroxyverbindung, ein Polyol sowie gegebenenfalls ein Imidazol oder Benzimidazol enthalten, sind aus der DE-A 39 38 203 bekannt.

Der Erfindung lagen neue Bindemittelsysteme, speziell für die Elektrotauchlackierung, als Aufgabe zugrunde, die auch ohne Blei oder nur mit geringen Mengen an Blei Überzüge mit gutem Korrosionsschutz und guter Elastizität liefern und die eine zügige Härtung ermöglichen.

Demgemäß wurden die eingangs definierten Bindemittelsysteme gefunden.

Außerdem wurden Dispersionen, die diese Bindemittelsysteme enthalten, gefunden sowie deren Verwendung für die kathodische Elektrotauchlackierung, weiterhin ein Verfahren zur Elektrotauchlackierung unter Verwendung der Dispersionen und nach diesem Verfahren beschichtete Gegenstände.

Im folgenden werden die für die Anwendung der erfindungsgemäßen Bindemittelsysteme für die Elektrotauchlackierung besonders vorteilhaften Ausführungsformen beschrieben.

Komponente A

Die als Komponente A geeigneten Grundharze sind solche Harze, die kationische quartäre Gruppen oder primäre und/oder sekundäre Aminogruppen sowie gegebenenfalls Hydroxyl- oder Thiolgruppen tragen. Als kationische quartäre Gruppen sind z.B. Sulfonium-, Ammonium- oder Phosphoniumgruppen zu nennen, die für eine Dispergierbarkeit der Harze in Wasser sorgen. Den gleichen Zweck erfüllen primäre oder sekundäre Aminogruppen nach Protonierung mit einer Säure. Harze mit primären und/oder sekundären Aminogruppen sind besonders bevorzugt.

Alle Grundharze haben vorzugsweise ein mittleres Molekulargewicht von 200 bis 20000, besonders bevorzugt von 200 bis 5000. Die Gesamtzahl der kationischen quartären oder der mit Säure protonierbaren Gruppen beträgt im Mittel vorzugsweise 2 bis 20, besonders bevorzugt 2 bis 15 pro Molekül A. Die Zahl der Hydroxyl- und Thiolgruppen beträgt im Mittel vorzugsweise 2 bis 40, besonders bevorzugt 2 bis 15.

Als für die Komponente A geeignete Grundharze kommen vor allem Polymere vom Typ der Polyurethane und Epoxidharze in Betracht.

Es haben sich Polyurethane ($a_1$) aus aliphatischen und/oder aromatischen Diisocyanaten und aliphatischen Diolen oder Polyolen als geeignete Grundharze erwiesen, wenn sie die zur Wasserdispergierung erforderlichen Gruppen aufweisen. Primäre oder sekundäre Aminogruppen lassen sich in das Polymer durch Reaktion der Isocyanate mit terminierenden mehrfunktionellen Aminen einführen. Diese Amine können primäre und sekundäre Aminfunktionen haben wie Diethylentriamin, Triethylentetramin und Polyetherdiamine mit endständigen Aminogruppen. Sie können auch primäre und tertiäre Aminfunktionen tragen wie Dimethylaminopropylamin und Diethylaminopropylamin.

Für die Diisocyanate seien vor allem Tetramethylendiisocyanat, Hexamethylendiisocyanat, Isophorondiisocyanat, Diphenylmethandiisocyanat, Toluylendiisocyanat, Naphthylendiisocyanat und 4,4'-Diphenyletherdiisocyanat genannt.

Als geeignete Diole kommen vor allem Ethylenglykokol, Diethylenglykol, Triethylenglykol, Propandiol, Butandiol, Hexandiol, Neopentylglykol oder Hydroxypivalinsäureneopentylglykolester in Frage. Es kommen aber auch höherwertige Alkohole in Betracht wie Trimethylolpropan, Glycerin, Pentaerythrit und Trimethylolbenzol.

Besonders bevorzugte Grundharze sind solche, deren Grundstrukturen auf Epoxidharzen ($a_2$) basieren.

Es können Epoxidharze eingesetzt werden, die durch Umsetzung mehrwertiger Phenole mit einem Epihalohydrin erhältlich sind. Dabei kann das Molekulargewicht durch das Molverhältnis der Ausgangsverbindungen gesteuert werden. Beispiele für solche mehrwertigen Phenole sind Resorcin, Hydrochinon, 2,2-Di-(4-hydroxyphenyl)propan (Bisphenol A), p,p'-Dihydroxybenzophenon, p,p'-Dihydroxydiphenyl, 1,1-Di(4-hydroxyphenyl)ethan, Bis-(2-hydroxynaphthyl)-methan, 1,5-Dihydroxynaphthylen und Novolake. Bisphenol A wird bevorzugt verwendet. Das bevorzugte Epihalohydrin ist Epichlorhydrin. Neben Epoxidharzen aus mehrwertigen Phenolen und Epihalogenhydrin können Polyglycidylether mehrwertiger aliphatischer Alkohole wie Ethylenglykol, Diethylenglykol, Triethylenglykol, 1,2-Propylenglykol, 1,3-Propylenglykol, 1,4-Butandiol, 1,5-Pentandiol, 1,6-Hexandiol, 1,2,6-Hexantriol, Glycerin oder Bis-(4-hydroxycyclohexyl)-2,2-propan verwendet werden.

Ganz besonders bevorzugt sind solche Epoxidharze, die durch Umsetzung von Diglycidylethern von Bisphenol A mit mehrwertigen Phenolen, insbesondere Bisphenol A, oder durch Umsetzung mit langkettigen Alkylphenolen wie 4-Nonylphenol oder Monoetherglykolen wie 2-Phenoxypropanol-1 erhältlich sind. Solche Reaktionen können durch Amine wie Dibenzylamin katalysiert werden.

Zur Einführung säureprotonierbarer Gruppen werden Epoxidharze, die noch Epoxidgruppen tragen, mit einem Amin oder Mischungen verschiedener Amine umgesetzt. Zu diesen Aminen zählen Alkylamine, Alkylalkanolamine, Polyoxyalkylenpolyamine und mehrwertige Polyolefinamine. Als Grundharz kommen Produkte in Betracht, die durch Reaktion eines Epoxidharzes mit einem Überschuß an primären Alkyldiaminen erhalten werden, deren Alkylrest 2 bis 20 Kohlenstoffatome hat. Als diprimäre Alkyldiamine kommen vor allem Ethylendiamin, 1,2- und 1,3-Diaminopropan, 1,4-Diaminobutan, Neopentandiamin und Hexamethylendiamin in Betracht. Geeignete sekundäre Dialkylmonoamine sind solche, deren Alkylreste 1 bis 20 Kohlenstoffatome enthalten, wobei Dimethylamin und Diethylamin bevorzugt werden. Ebenfalls geeignet sind Alkylalkanolamine, deren Alkyl- und Alkanolreste jeweils 1 bis 20 Kohlenstoffatome enthalten können, wobei die Kettenlänge der Reste gleich oder verschieden voneinander sein kann. Als Alkylalkanolamine sind z.B. Ethylethanolamin, Methylisopropanolamin und besonders Methylethanolamin zu nennen. Die Polyoxyalkylenpolyamine, die eingesetzt werden können, sind beispielsweise Polyoxyethylenpolyamin, Polyoxypropylenpolyamin und Polyoxybutylenpolyamin. Zu der Gruppe der Polyolefinpolyamine zählen aminterminierte Butadien-Acrylnitril-Copolymere mit einem mittleren Molekulargewicht von 200 bis 5000.

Falls gewünscht, können die mit Aminen modifizierten Epoxidharze mit Dicarbonsäuren kettenverlängert werden, z.B. mit Sebacinsäure oder einer dimeren Fettsäure. Eine Mitverwendung von Monocarbonsäuren wie einer Fettsäure ist ebenfalls möglich.

Weiterhin können Aminkomponenten in die Epoxidharze durch Reaktion mit einem sogenannten Amidamin eingeführt werden, d.h. Kondensationsprodukte aus Dicarbonsäuren, bevorzugt Dimerfettsäuren, und Polyaminen, bevorzugt aliphatischen Polyaminen, wie z.B. Diethylentriamin oder Triethylentetramin. Terminierende Monocarbonsäuren, bevorzugt $C_{12}$-$C_{20}$-Carbonsäuren, können mit in das Amidamin eingebraut werden. Besonders geeignet sind solche Produkte, deren Aminzahl zwischen 200 und 500 mg/g liegt.

Die mit Aminen modifizierten Epoxidharze können gewünschtenfalls mit 0 bis 20 Gew.-% Polyester vermischt verwendet werden. Diese Polyester haben ein mittleres Molekulargewicht von 200 bis 20000, vorzugsweise von 200 bis 5000. Es handelt sich hierbei um Polykondensationsprodukte aus Dicarbonsäuren und mehrwertigen Alkoholen.

Als Carbonsäurekomponente kommen Verbindungen wie Maleinsäure, Bernsteinsäure, Glutarsäure, Adipinsäure, Pimelinsäure, Korksäure, Azelainsäure, Sebacinsäure, Cyclohexandicarbonsäure, Phthalsäure, Isophthalsäure und Terephthalsäure sowie funktionelle Derivate dieser Säuren in Betracht. Als Alkoholkomponente sind aliphatische Diole wie Ethylenglykol, Diethylenglykol, Triethylenglykol, Propandiol, Butandiol, Hexandiol, Neopentylglykol und Hydroxypivalinsäureneopentylglykolester zu nennen sowie weiterhin höherwertige Alkohole wie Trimethylolpropan, Glycerin, Erythrit, Pentaerythrit, Trimethylolbenzol und Tris(hydroxyethyl)isocyanurat.

Hydroxyl- oder Thiolgruppen können durch Reaktion von Alkoholen bzw. Thiolen mit Epoxidgruppen in die Harze eingeführt werden.

Komponente B

Als Komponente B enthalten die erfindungsgemäßen Bindemittelsysteme einen Vernetzer, und zwar vorzugsweise in einer Menge von 5 bis 50 Gew.-%, besonders bevorzugt 10 bis 40 Gew.-%. Als Vernetzer sind verkappte mehrfunktionelle Isocyanate oder Mischungen verschiedener verkappter, mehrfunktioneller Isocyanate geeignet.

Diese Vernetzer leiten sich von z.B. 1,6-Hexamethylendiisocyanat, Naphthalindiisocyanat und Triphenylmethantriisocyanat sowie den Trimeren von 1,6-Hexamethylendiisocyanat, Isophorondiisocyanat und Toluylendiisocyat ab, bevorzugt werden Toluylendiisocyanat, 4,4'-Diphenylmethandiisocyanat, Isophorondiisocyanat und das Trimere des 1,6-Hexamethylendiisocyanates.

Zum Verkappen eignen sich z.B. einwertige Alkohole, bevorzugt kurzkettige, aliphatische Alkohole wie Methanol, Ethanol, n-Propanol, iso-Propanol, n-Butanol, iso-Butanol oder sek.-Butanol. Außerdem eignen sich Monoether von aliphatischen Diolen wie Ethylenglykolmonopropylether und Ethylenglykolmonobutylether. Weiterhin kommen sekundäre Amine, vorzugsweise kurzkettige aliphatische Amine wie Dimethyl-, Diethyl-, Dipropyl- oder Dibutylamin, oder Alkanolamine, bevorzugt tertiäre Alkanolamine wie Tri(n-propanol)amin oder Tri(iso-propanol)amin oder deren Mischungen in Betracht. Die mehrwertigen Isocyanate werden mit den Verkappungsverbindungen in solchen Mengen in an sich bekannter Weise umgesetzt, daß im Mittel möglichst alle Isocyanatgruppen pro Molekül verkappt werden.

Komponenten C und D

Die Komponente C ist ein in Wasser mindestens teilweise löslicher Komplex des Eisens mit aromatischen Carbonyl- oder Hydroxylverbindungen. Diese können durch Umsetzung anderer Eisensalze hergestellt werden. In einer bevorzugten Ausführungsform werden Eisen-III-Salze mit aromatischen Aldehyden, vor allem Salicylaldehyd, bei 50 - 100°C über 2 bis 10 Stunden umgesetzt und das Reaktionsprodukt direkt als Komponente C eingesetzt.

Komponente C wird in katalytisch wirksamen Mengen eingesetzt. Bevorzugte Mengen liegen bei 0,002 bis 0,5, besonders bevorzugt bei 0,01 bis 0,3 Gew.-%, bezogen auf das Gesamtgewicht der Komponenten A und B.

Die katalytische Aktivität der Eisenverbindung C kann durch Zusätze D weiter gesteigert werden. Zusatz D können cyclische stickstoffbasische Verbindungen sein. Besonders vorteilhaft sind Imidazole oder Benzimidazole, von denen 1,2-Dimethylimidazol besonders bevorzugt wird. Die Menge dieser Zusätze kann von 5 bis 90 Gew.-% reichen, vorzugsweise von 10 bis 80 Gew.-% bezogen auf das Gesamtgewicht von C und D.

Die Komponenten C und D können in Substanz, vorzugsweise aber in einem Lösungsmittel eingesetzt werden. Als Lösungsmittel kommen polare Verbindungen wie Aceton, Methyl-tert.butylketon und Methyl-tert.-amylketon sowie mehrfunktionelle Alkohole in Frage wie Polyethylenglykol mit einem mittleren Molekulargewicht von 200 bis 10000. Mischungen dieser Lösungsmittel sind ebenfalls geeignet.

Das Lösungsmittel wird vorteilhaft in Mengen von 50 bis 95 Gew.-% bezogen auf das Gesamtgewicht der Komponente C, D und Lösungsmittel verwendet, bevorzugt sind 70 bis 90 Gew.-%.

Besonders bevorzugt wird ein Katalysatorsystem, das durch Reaktion von Eisenacetylacetonat mit Salicylaldehyd in einem Lösungsmittel in Gegenwart von 1,2-Dimethylimidazol hergestellt wird.

Das Grundharz A ist in Wasser dispergierbar, im Falle von Aminogruppen tragenden Grundharzen nach teilweiser oder vollständiger Neutralisation. Zur Neutralisation sind Mineralsäuren wie Phosphorsäure sowie bevorzugt Carbonsäuren wie Ameisensäure, Essigsäure, Propionsäure und Milchsäure geeignet. Vorteilhaft ist es, vor der Neutralisation Grundharz A und Vernetzer B innig zu vermischen. Solche Mischungen enthalten 50 bis 95 Gew.-% A und 5 bis 50 Gew.-% B.

Weiterhin hat sich bewährt, auch den Katalysator vor Neutralisation mit den Komponenten A und B zu vermischen, um so eine homogene Verteilung aller Komponenten zu erreichen. Möglich ist aber auch eine getrennte Zugabe der Komponente C sowie evt. weiterer Zusatzstoffe D zum dispergierten Harzsystem. Die Dispersionen können mit Wasser auf einen gewünschten Feststoffgehalt verdünnt werden. Um eine möglichst stabile Dispersion zu erhalten, sollten die dispergierten Teilchen eine mittlere Teilchengröße von 10 - 200 nm haben.

Zur Herstellung von Elektrotauchbädern können den erfindungsgemäßen Bindemittelsystemen weitere Bindemittel, Pigmente, sowie in der Elektrotauchlackierung übliche Hilfs- und Zusatzstoffe wie Füllstoffe, Korrosionsinhibitoren, Dispergierhilfsmittel, Entschäumer und/oder Lösungsmittel zugesetzt werden.

Die Elektrotauchlackierung erfolgt in an sich bekannter Weise.

Die erfindungsgemäßen Bindemittel bewirken nach kathodischer Abscheidung hohen Korrosionsschutz auf Metallteilen und bleiben elastisch. Die Überzüge härten zügig aus. Die Eigenschaften können sogar dann erreicht werden, wenn die Überzüge nur wenig oder kein Blei enthalten.

Beispiele

1. Herstellung eines Grundharzes A

960 g eines Polyglycidylethers auf Basis von 2,2-Di-(4-hydroxyphenyl)propan (Bisphenol A) und Epichlorhydrin (Epoxidäquivalentgewicht 480), 110 g (0,5 mol) 4-Nonylphenol und 56 g (0,37 mol) 2-Phenoxypropanol-1 wurden mit 1,1 g (0,01 mol) Dibenzylamin auf 130°C erhitzt, bis ein Epoxidäquivalentgewicht von 1040 erreicht war. Diese Mischung wurde mit 360 g iso-Butanol und 40 g Ethylenglykolmonobutylether verdünnt und 10 Minuten bei 60°C mit 30 g (0,4 mol) Methylethanolamin umgesetzt. Nach Zugabe von 98 g einer Lösung eines Amidamins sowie von 36 g iso-Butanol und 4 g Ethylenglykolmonobutylether wurde 2 h auf 80°C erhitzt. Das Grundharz hatte einen Feststoffgehalt von 70 % und eine Aminzahl von 51 mg/g, die Zahl der mit Säure protonierbaren Gruppen und der Hydroxylgruppen betrug im Mittel 15.

Das Amidamin wurde durch Umsetzung von 290 g (2,5 mol) Hexamethylendiamin, 218 g (0,38 mol) Dimerfettsäure und 70 g (0,25 mol) Leinölfettsäure in 31 g Xylol bei 190°C unter Abdestillieren des Reaktionswassers hergestellt. Nach Verdünnung mit 92 g Xylol und Zugabe von 7 g (0,01 mol) Hexamethylendiamin betrug die Aminzahl 350 mg/g.

2. Herstellung eines Vernetzers B

504 g (3 mol) trimerisiertes Hexamethylendiisocyanat wurden in 400 g Xylol bei 70°C mit 388 g (3 mol) Dibutylamin versetzt und bei dieser Temperatur gehalten, bis der Isocyanatwert ca. 0 betrug. Der Feststoffgehalt betrug 70 %.

3. Herstellung von verschiedenen Katalysatorsystemen

Katalysatorsystem K1

In 861 g Polyethylenglykol mit einem mittleren Molekulargewicht $\overline{M}_w$ von 6500 und 48 g Methylisoamylketon wurden 24 g (0,067 mol) Eisen(III)-acetylacetonat, 57,7 g (0,6 mol) 1,2-Dimethyl-imidazol und 9,6 g (0,08 mol) Salicylaldehyd auf 100°C erhitzt, bis ein Farbumschlag nach dunkelrot eintrat (ca. 5 h).

Katalysatorsystem K2

Umsetzung wie bei Katalysator 1, aber ohne 1,2-Dimethylimidazol

Katalysatorsystem K3

Umsetzung wie bei Katalysator 1, aber mit 20 g (0,11 mol) Eisen(III)acetat statt Eisenacetylacetonat.

4. Herstellung von Dispersionen

850 g Bindemittel A, 364 g Vernetzer B und die in der Tabelle angegebenen Mengen der Katalysatorsysteme wurden mit 42,6 g 50%iger wäßriger Milchsäure versetzt und in 1,19 kg Wasser dispergiert. Durch azeotrope Destillation wurden die organischen Lösungsmittel entfernt und durch die entsprechende Menge Wasser ersetzt. Die Dispersionen D1 - D7 hatten einen Feststoffgehalt von 35 %.

Zum Vergleich wurde aus Bindemittel A und Vernetzer B eine Dispersion ohne die Komponenten C und D angesetzt.

5. Herstellung einer Pigmentpaste

388 g eines Reibharzes wurden mit 77,6 g 50%iger wäßriger Milchsäure in 1060 g Wasser dispergiert. Nach Zugabe von 865 g Titandioxid, 19,5 g Ruß, 156 g Zinksilikat und 195 g Aluminumsilikat wurde in einer Kugelmühle auf eine Kornfeinheit von unter 7 μm gemahlen. Die Paste hatte einen Feststoffgehalt von 60 %.

Das Reibharz wurde durch Reaktion von 805 g Diglycidylether auf Basis von Bisphenol A und Epichlorhydrin (Epoxidäquivalentgewicht 188), 379 g Polytetrahydrofurandiglycidylether (Epoxidäquivalentgewicht 415), 205 g (0,9 mol) Bisphenol A, 118 g (0,45 mol) 4-Dodecylphenol, 99 g (0,45 mol) 4-Nonylphenol, 42,6 Propylenglykolmonophenylether und 0,5 g Triphenylphosphin bei 130°C hergestellt. Als ein Epoxidäquivalentgewicht von 475 erreicht war, wurden 90 g Propylenglykolmonomethylether zugesetzt. Bei 80°C wurden in 1 h 479 g (1,71 mol) Leinölfettsäure, dann 227 g (1,71 mol) Diethylaminopropylamin zugegeben. Als das Epoxidäquivalentgewicht auf ca. Null gefallen war, wurden 103 g (3,43 mol $CH_2O$) Paraformaldehyd zugesetzt und der Reaktionsansatz wurde bei 80-90°C bis zum vollständigen Umsatz des Formalehyds gehalten. Das Reibharz hatte einen Feststoffgehalt von 94,8 % und eine Aminzahl von 81 mg/g.

6. Elektrotauchlackierung und Tests

Für die kathodische Elektrotauchlackierung wurden 1980 g der Dispersionen D1 bis D7 sowie die Vergleichsdispersion mit 620 g Pigmentpaste vermischt und mit Wasser auf einen Feststoffgehalt von 21 % eingestellt.

An als Kathode geschalteten phosphatierten Stahlblechen wurden bei Raumtemperatur in üblicher Weise Lacke abgeschieden und 25 Minuten eingebrannt. Bei Abscheidespannungen von 320 - 380 V wurden Schichtdicken von 23 μm erzielt. Weitere Einzelheiten können der Tabelle entnommen werden. Weitere mechanische Eigenschaften sowie der Korrosionsschutz erfüllten höchste Qualitätsanforderungen.

Acetontest: Der Test besteht aus 50-maligem Hin- und Herreiben eines Aceton-getränkten Wattebausches auf der Lackoberfläche unter Druck. Es erfolgt eine optische Bewertung von 0 (kein Angriff) bis 5 (sehr stark angegriffen).

RI:    reverse impact, Schlagtiefung (nach ASTM D 2794) Bestimmung mit einem mandrel impact tester

Tabelle

| | DISPERSIONEN | | | | | ÜBERZÜGE | |
|---|---|---|---|---|---|---|---|
| | Katalysator | [g] | Eisen [ppm] | 1,2-Dimethy-limidazol [ppm] | mittlere Teil-chengröße [nm] | Acetontest Einbrenntemperatur 150°C | RI [Nm] Einbrenntemperatur 160°C |
| D1 | K1 | 8 | 13 | 200 | 140 | 1-2 | 15,8 |
| D2 | K1 | 16 | 26 | 400 | 120 | 0 | 15,8 |
| D3 | K1 | 40 | 65 | 1000 | 90 | 0 | 15,8 |
| D4 | K1 | 80 | 130 | 2000 | 110 | 0 | 18,8 |
| D5 | K1 | 160 | 260 | 5000 | 150 | 0 | 18,8 |
| D6 | K2 | 40 | 130 | - | 30 | 0 | 15,8 |
| D7 | K3 | 40 | 200 | 2000 | 110 | 0 | 15,8 |
| Vergleich | - | - | - | - | 140 | 4 | 9,1 |

**Patentansprüche**

1.    Für die Elektrotauchlackierung verwendbare wäßrige Dispersionen, enthaltend ein Bindemittelssystem aus

-    einem Grundharz A, welches primäre und/oder sekundäre Aminogruppen oder kationische quartäre Gruppen sowie gegebenenfalls Hydroxyl- oder Thiolgruppen trägt

-    einer Vernetzungkomponente B, die pro Molekül mindestens zwei verkappte Isocyanatgruppen trägt und

-    einem in Wasser mindestens teilweise löslichen, Komplex des Eisens mit aromatischen Carbonyl- oder Hydroxylverbindungen als Katalysatorkomponente C für die thermische Vernetzung der Komponenten A und B sowie
gegebenenfalls einem die katalytische Aktivität von C erhöhenden Zusutz D.

**2.** Dispersionen nach Anspruch 1, dadurch gekennzeichnet, daß das Grundharz A

   a1) ein Polyurethanharz
   a2) ein Epoxidharz

oder eine Mischung dieser Bindemittel ist.

**3.** Dispersionen nach Anspruch 2, dadurch gekennzeichnet, daß die Polyurethanharze a1) und die Epoxidharze a2) tertiäre Aminogruppen tragen, die im Falle der Epoxidharze a2) Alkyl- und/oder Alkanolreste mit jeweils 1 bis 20 Kohlenstoffatomen enthalten.

**4.** Dispersionen nach einem der Ansprüche 1 bis 3, dadurch gekennzeichnet, daß die Komponente D eine cyclische stickstoffbasische Verbindung ist.

**5.** Dispersionen nach Anspruch 4, dadurch gekennzeichnet, daß die stickstoffbasische Verbindung ein Imidazol oder ein Benzimidazol ist.

**6.** Verfahren zur Herstellung fester Überzüge auf elektrisch leitfähigen Materialien nach der Methode der kathodischen Elektrotauchlackierung, dadurch gekennzeichnet, daß man hierzu die Dispersionen gemäß einem der Ansprüche 1 bis 5 sowie gegebenenfalls weitere hierfür übliche Zusatzstoffe verwendet und die erhaltenen Überzüge bei 100 bis 200°C vernetzt.

**7.** Verwendung der wäßrigen Dispersionen gemäß einem der Ansprüche 1 bis 5 für die Ellektrotauchlackierung.

**8.** Mittels kathodischer Elektrotauchlackierung beschichtete Gegenstände, erhältlich nach dem Verfahren gemäß Anspruch 6.

**Claims**

**1.** An aqueous dispersion which can be used for electrocoating and contains a binder system comprising

   - a base resin A which carries primary and/or secondary amino groups or cationic quaternary groups and, if desired, hydroxyl or thiol groups,

   - a crosslinking component B which carries at least two blocked isocyanate groups per molecule and

   - an at least partially water-soluble complex of iron with aromatic carbonyl or hydroxy compounds, as catalyst component C for the thermal crosslinking of components A and B, and
     if desired, an additive D which increases the catalytic activity of C.

**2.** A dispersion as claimed in claim 1, wherein the base resin A is

   a1) a polyurethane resin,
   a2) an epoxy resin

or a mixture of these binders.

**3.** A dispersion as claimed in claim 2, wherein the polyurethane resins a1) and the epoxy resins a2) carry tertiary amino groups which, in the case of the epoxy resins a2), contain alkyl and/or alkanol radicals each having 1 to 20 carbon atoms.

**4.** A dispersion as claimed in any of claims 1 to 3, wherein component D is a cyclic nitrogen base.

**5.** A dispersion as claimed in claim 4, wherein the nitrogen base is an imidazole or a benzimidazole.

**6.** A process for the production of a solid coating on electrically conductive materials by the method of cathodic electrocoating, wherein a dispersion as claimed in any of claims 1 to 5 and, if desired, further conventional additives are used for this purpose and the resulting coating is crosslinked at fromm 100 to 200°C.

**7.** A method of using an aqueous dispersion as claimed in any of claims 1 to 5 for electrocoating.

**8.** An article coated by cathodic electrocoating and obtainable by a process as claimed in claim 6.

## Revendications

**1.** Dispersions aqueuses pouvant être utilisées pour le revêtement électrophorétique, contenant un système de liant comprenant

- une résine de base A qui renferme des groupes amino primaires et/ou secondaires ou des groupes quaternaires cationiques et éventuellement des groupes hydroxy ou thiol,
- un composant de réticulation B qui renferme au moins deux groupes isocyanate bloqués par molécule et
- un complexe du fer, au moins partiellement hydrosoluble, avec des composés carbonyle ou hydroxy aromatiques, en tant que composant catalyseur C pour la réticulation thermique des composants A et B, et éventuellement un additif D augmentant l'activité
catalytique de C.

**2.** Dispersions selon la revendication 1, caractérisées en ce que la résine de base A est

a1) une résine de polyuréthanne,
a2) une résine époxy

ou un mélange de ces liants.

**3.** Dispersions selon la revendication 2, caractérisées en ce que les résines de polyuréthanne a1) et les résines époxy a2) renferment des groupes amino tertiaires qui, dans le cas des résines époxy a2), renferment des radicaux alkyle et/ou alcanol ayant dans chaque cas de 1 à 20 atomes de carbone.

**4.** Dispersions selon l'une quelconque des revendications 1 à 3, caractérisées en ce que le composant D est un composé basique azoté cyclique.

**5.** Dispersions selon la revendication 4, caractérisées en ce que le composé basique azoté est un imidazole ou un benzimidazole.

**6.** Procédé de préparation de revêtements solides sur des matériaux conducteurs de l'électricité par la méthode du revêtement électrophorétique cathodique, caractérisé en ce que l'on utilise à cet effet les dispersions selon l'une quelconque des revendications 1 à 5 et éventuellement d'autres additifs habituels à ces fins, et l'on réticule les revêtements obtenus entre 100 et 200°C.

**7.** Utilisation des dispersions aqueuses selon l'une quelconque des revendications 1 à 5 pour le revêtement électrophorétique.

**8.** Articles revêtus d'un revêtement électrophorétique cathodique, pouvant être obtenus par le procédé selon la revendication 6.